# EUROPEAN PATENT APPLICATION

(11) **EP 2 738 673 A1**
(43) Date of publication of application: **04.06.2014**
(21) Application number: 12461561.8
(22) Date of filing: 03.12.2012
(51) Int. Cl.: G06F 9/44

(54) **Method and system for self-configuration of a system**

(71) Applicant: Politechnika Poznanska, 60-965 Poznan (PL)
(72) Inventor: Dwornikowski, Dariusz, 61-872 Poznan (PL); Brzezinski, Jerzy, 60-472 Poznan (PL); Sajkowski, Michal, 61-626 Poznan (PL); Wsul, Tomasz, 64-930 Szydlowo (PL); Lamecki, Jan, 60-128 Poznan (PL)
(74) Representative: Pawlowski, Adam

(57) **Abstract**

System and method for self-configuration of a system, the method comprising the steps of providing a declarative description of a resource to a Register of Managers; transmitting the declarative description to a control manager; identifying a resource associated with the declarative description; retrieving from the identification of the resource, information about a plug-in providing a function of monitoring of the resource; sending, from the Control Manager a request to an Extensions Repository to retrieve the plug-in; responding to the request wherein the Extensions Repository sends the requested plug-in to the control Manager; and extending the features of the Control Manager by means of the plug-in with a subsequent monitoring of the resource.

## Description

The object of the present invention is a method and system for self-configuration of a system, in particular system's management self-configuration.

Prior art discloses some methods for computer system reconfiguration or self-configuration in real time.

A US patent US8086706 entitled "System and method for self configuration of reconfigurable systems", discloses a system and method for reconfigurable computers. The invention involves a plurality of reconfigurable component clusters (RCCs), each of which can change their respective configuration upon receiving a configuration command. The invention uses a reconfiguration network for distributing the configuration command to the RCCs, wherein the reconfiguration network comprises a plurality of cells, wherein each RCC is connected to a cell.

This approach is very complex and requires programmable hardware such as field programmable gate array device (FPGA), that can be electrically programmed to perform various specific logic functions.

Another US patent US7599985 entitled "Distributed hypermedia method and system for automatically invoking external application providing interaction and display of embedded objects within a hypermedia document" provides software-based plug-in system. It discloses a system allowing a user of a browser program on a computer connected to an open distributed hypermedia system to access and execute an embedded program object. The program object is embedded into a hypermedia document much like data objects. The user may select the program object from the screen. Once selected the program object executes on the user's (client) computer or may execute on a remote server or additional remote computers in a distributed processing arrangement. After launching the program object, the user is able to interact with the object as the invention provides for ongoing inter-process communication between the application object (program) and the browser program. One application of the embedded program object allows a user to view large and complex multi-dimensional objects from within the browser's window. The user can manipulate a control panel to change the viewpoint used to view the image. The invention allows a program to execute on a remote server or other computers to calculate the viewing transformations and send frame data to the client computer thus providing the user of the client computer with interactive features and allowing the user to have access to greater computing power than may be available at the user's client computer.

A drawback of this method is that is it not exactly enhancing capabilities of a system as each retrieved document shall explicitly call the plug-in extension in the expectation that the browser supports it.

Therefore, as can be readily seen, enhancements of methods for self-configuration of a system would be very beneficial.

The aim of the present invention is to alleviate the aforementioned drawbacks of the prior art and present a method for self-configuration of a computer system.

The object of the present invention is a system for self-configuration of a system comprising a Register Of Managers configured for storing data about computing resource managers such as their location, available monitoring sensors and detected resources that are monitored; wherein the Register Of Managers is further configured to receive a declarative description of a resource that is required; at least one Control Manager, communicatively coupled to the Register Of Managers, configured to gather data from the available monitoring sensors; an Extensions Repository, communicatively coupled to the at least one Control Manger, having access to at least one extension wherein the extension is a plug-in software that is programmed to extend the Control Manager by support of a given monitoring sensor; whereas the Control Manager is configured to retrieve from the Extensions Repository an extension that matches the declarative description and to extend its features by means of the extension.

Preferably, the at least one Control Manager is installed on a remote network node.

Preferably, the at least one Control Manager is a computing device that is configured to communicate with at least one sensor such as a temperature sensor, a humidity sensor or an acceleration sensor of a given vendor.

Preferably, the the extensions are transmitted to the Control Manager after a Control Manager detects a resource, with which a given extension may be associated.

A further object of the present invention is a method for self-configuration of a system, the method comprising the steps of providing a declarative description of a resource to a Register of Managers; transmitting the declarative description to a control manager; identifying a resource associated with the declarative description; retrieving from the identification of the resource, information about a plug-in providing a function of monitoring of the resource; sending, from the Control Manager a request to an Extensions Repository to retrieve the plug-in; responding to the request wherein the Extensions Repository sends the requested plug-in to the control Manager; and extending the features of the Control Manager by means of the plug-in with a subsequent monitoring of the resource.

Preferably, the declarative description comprises an identifier of an associated plug-in extension, an identifier of a resource and a list of conditions, fulfillment of which means that the resource is available to a Control Manager.

Preferably, the plug-ins retrieved by the Control Manager are configured to share resources and be used to execute a single task.

Preferably, the extension plug-ins are executed contextually, meaning that if an execution context requires another plug-in, the manager will run it.

The object of the present invention is also computer software comprising program code means for performing all the steps of the computer-implemented method according to the present invention when said program is run on a computer.

The object of the present invention is also a computer readable recording medium storing computer-executable instructions performing all the steps of the computer-implemented method according to the present invention when executed on a computer.

These and other objects of the invention presented herein are accomplished by providing an improved system and method for self-configuration of a computer system. Further details and features of the invention, its nature and various advantages will become more apparent from the following detailed description of the preferred embodiments shown in a drawing, in which:
FIG. 1 presents a schematic diagram of a system according to the present invention;
FIG. 2 shows a schematic diagram of a method according to the present invention; and
Fig. 3 depicts an extended system wherein the configurations comprises four plug-ins exchanging data.

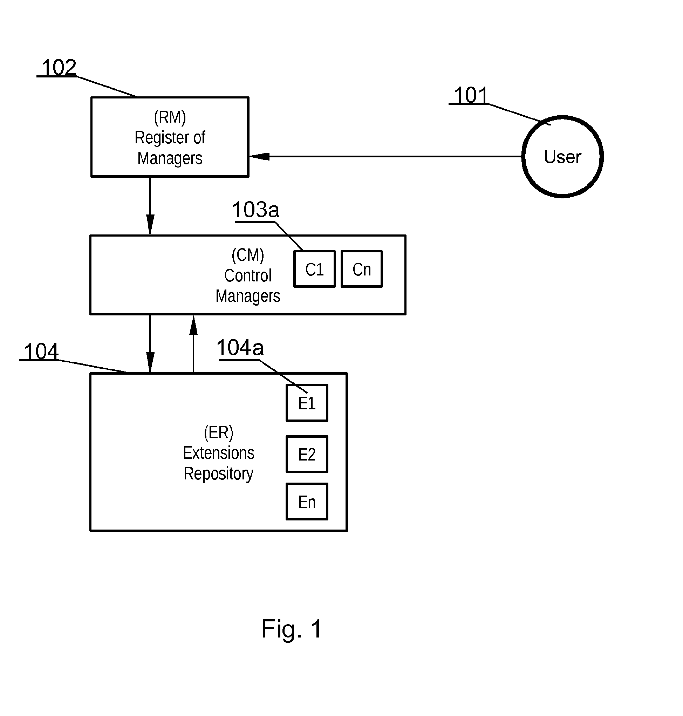

The present invention relates to a method of self-configuration of computer systems and in particular systems designed for management of distributed computer systems. As can be seen on Fig. 1 there are three main elements of the system.

A user of the system 101 provides input via an input interface to a Register Of Managers (RM) 102. The Register Of Managers (RM) 102 stores data about computing resource managers such as their location, available sensors and detected resources that are monitored.

The next element of the system are Control Managers (CM) 103 installed on remote nodes. The aim of the Control Managers (CM) 103 is, for example, to gather data from the built-in monitoring sensors. There may be a plurality of Control Managers (CM) C1 to Cn 103a. In the presented embodiment of the invention, a Control Manager is a computing device that may communicate with at least one sensor such as a temperature sensor, a humidity sensor or an acceleration sensor of a given vendor.

The last key element of the system is an Extensions Repository (ER) 104 that may have access to at least one extension 104a. Typically an extension is a plug-in software that is programmed to extend a Control Manager by support of a given sensor of a given vendor.

The aim of a process, according to the present invention, is to automatically extend features of a control manager (CM) with a use of plug-ins (extensions) stored in the Extensions Repository (ER). The extensions are transmitted after a Control Manager (CM) detects a resource, with which a given extension may be associated. For example, when a Control Manager (CM) detects a process of a given type WWW server, it shall automatically be extended with a plug-in implementing a functionality of monitoring of such WWW server process. Hence, the plug-ins shall be prepared in advance for all known resources that may be monitored. In order to associate a given plug-in with a resource, the method assumes that this information will be stored at a Register Of Managers (RM) in a form of a declarative description, that is a description that will unambiguously associate a resource with an extension.

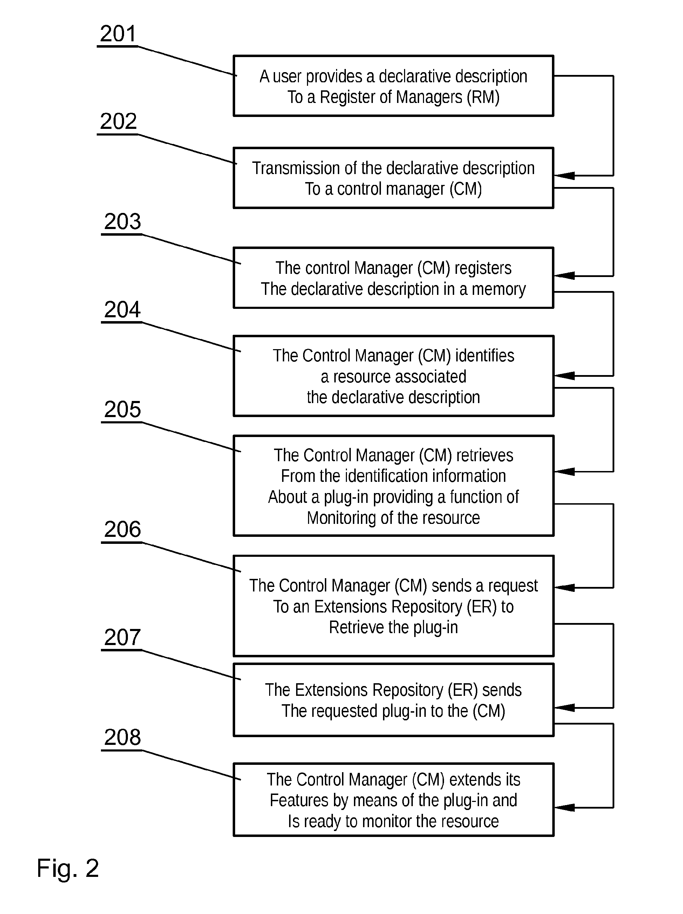

Fig. 2 shows a schematic diagram of a method according to the present invention. It is a process of self-configuration from a point of view of communication between the components of the system: a Register Of Managers (RM), a Control Manager (CM), an Extensions Repository (ER). The first step of the method is to define a declarative description of a resource so that a user may provide 201 a declarative description to a Register of Managers (RM). The subsequent step is a transmission 202 of the declarative description to a control manager (CM). Subsequently the control Manager (CM) registers 203 the declarative description in a memory. Next, the process moves to step 204 where the Control Manager (CM) identifies a resource associated with the declarative description. Subsequently the Control Manager (CM) retrieves 205 from the identification information about a plug-in providing a function of monitoring of the resource. Further, at step 206, the Control Manager (CM) sends a request to an Extensions Repository (ER) to retrieve the plug-in. The next step is to respond to the request wherein the Extensions Repository (ER) sends 207 the requested plug-in to the (CM). Finally, at step 208, the Control Manager (CM) extends its features by means of the plug-in and is ready to monitor the resource.

In order to fulfill requirements of the process there is needed a declarative description that shall comprise the following data:
a) an identifier of an associated plug-in extension;
b) an identifier of a resource; and
c) a list of conditions, fulfillment of which means that the resource is available to a CM.

One of the key elements of the present invention is that based on detection rules (defined in a Resource Description Language), the managers themselves detect what is available to them and being aware of this the managers retrieve extension plug-ins associated with the detected resources.

An example of a definition in a Resource Description Language may be the following:

```
 (AND (isos-linux)
       (OR // Block1
              (AND (has-file "/etc/init.d/apache")
                            (proc-running "httpd")
                            (socket-open "tcp:80")) // Block2
              (AND (has-file "/etc/init.d/apache2")
                            (proc-running "httpd2")
                            (socket-open "tcp:80"))))
```

The above definition creates an OR query and states that if the operating system is linux and there exists a file /etc/init.d/apache, there is running a process named httpd, there is open a communication port 80 OR if the operating system is linux and there exists a file /etc/init.d/apach2, there is running a process named httpd2, there is open a communication port 80, this means that there has been detected a server of type apache. Such entry of an RDL is associated usually with a metadata entry defining where an appropriate extension plug-in is available that will manage the server or for example only monitor the server. The exact function of the extension plug-in is unknown at this stage. Only after retrieval it will be possible to determine what the plug-in extension actually is capable of doing.

A control Manager may comprise a circuit or module for processing definitions in the RDL. Based on this processing there is a decision made whether a given resource has been detected, for example a WWW server, a network switch, e-mail server. When a given resource has been detected a repository of extension plug-ins is queried for information whether there is a controlling or monitoring plug-in associated with the selected resource. For example after finding a WWW server the manager will retrieve a plug-in that will allow for switching the server on and off, modifying its settings, checking memory resources used etc. Thus capabilities of the control manager are enhanced with the extension plug-in retrieved.

Another advantage of the present invention arising from the fact that the control manager is internally enhanced with the extension plug-in, is that the plug-ins may share resources and be used to execute a single task. The extension plug-ins are executed contextually meaning that if an execution context requires another plug-in, the manager will run it. The plug-ins cooperate with each other depending on task requirements. For example a plug-in for data correlation cooperates with plug-ins managing sensors in order to retrieve data from the sensors. After that an exemplary plug-in for creating and displaying results charts must cooperate with the plug-in for data correlation in order to obtain processed data. It is of special advantage that extension plug-ins are aware what other extension plug-ins are available within the system.

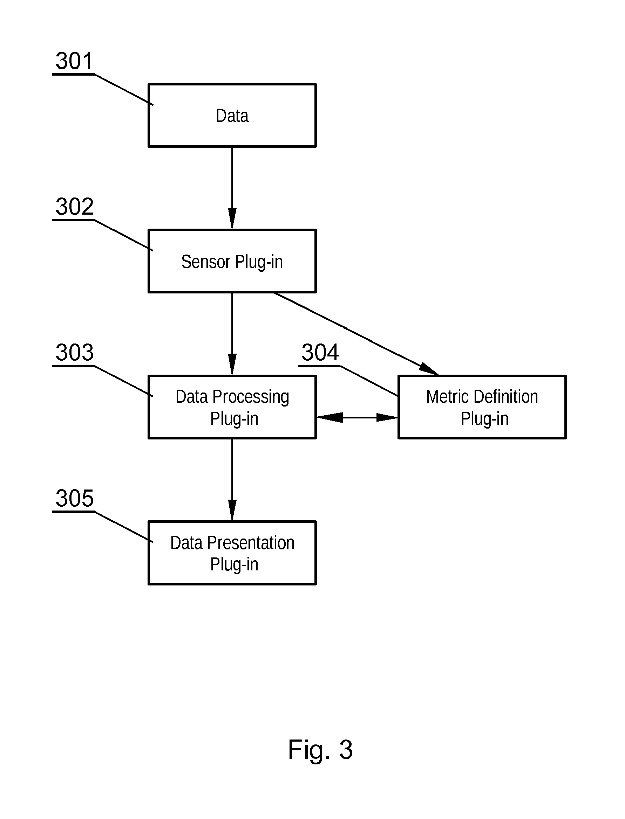

Fig. 3 depicts an extended system wherein the configurations comprises four plug-ins exchanging data. There is a source of data 301 that provides information to a first sensor 302. The first sensor 302 additionally finds information on how to retrieve data, how frequently to retrieve data in a metrics definition plug-in 304. The input data are forwarded to the data processing sensor 303 that may also configure its processing schedule using configuration provided by the metric definition plug-in 304. For example processing means that from CPU load data there may be calculated average CPU load during the last three minutes. The processed data are fed to a data consumer, which in the depicted exemplary embodiment is a data presentation plug-in 305. The data presentation plug-in 305 may be a software component that is configured to generate charts or diagrams and generate a video output signal for presentation on a display screen.

It can be easily recognised, by one skilled in the art, that the aforementioned system and method for self-configuration of a computer system may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. System for self-configuration of a system **characterized in that** it comprises
- a Register Of Managers (102) configured for storing data about computing resource managers such as their location, available monitoring sensors and detected resources that are monitored;
- wherein the Register Of Managers (102) is further configured to receive a declarative description of a resource that is required;
- at least one Control Manager (103), communicatively coupled to the Register Of Managers, configured to gather data from the available monitoring sensors;
- an Extensions Repository (104), communicatively coupled to the at least one Control Manger (103), having access to at least one extension (104a) wherein the extension is a plug-in software that is programmed to extend the Control Manager by support of a given monitoring sensor;
- whereas the Control Manager (103) is configured to retrieve from the Extensions Repository (104) an extension (104a) that matches the declarative description and to extend its features by means of the extension (104a).

2. The System according to claim 1 **characterized in that** the at least one Control Manager (103) is installed on a remote network node.

3. The System according to claim 1 **characterized in that** the at least one Control Manager (103) is a computing device that is configured to communicate with at least one sensor such as a temperature sensor, a humidity sensor or an acceleration sensor of a given vendor.

4. The System according to claim 1 **characterized in that** the the extensions are transmitted to the Control Manager (103) after a Control Manager (103) detects a resource, with which a given extension may be associated.

5. Method for self-configuration of a system, the method being **characterized in that** it comprises the steps of:
- providing (201) a declarative description of a resource to a Register of Managers (102);
- transmitting (202) the declarative description to a control manager (103);
- identifying (204) a resource associated with the declarative description;
- retrieving (205) from the identification of the resource, information about a plug-in providing a function of monitoring of the resource;
- sending (206), from the Control Manager (103) a request to an Extensions Repository (104) to retrieve the plug-in;
- responding to the request wherein the Extensions Repository (104) sends (207) the requested plug-in to the control Manager (103); and
- extending (208) the features of the Control Manager (103) by means of the plug-in with a subsequent monitoring of the resource.

6. Method for self-configuration of a system according to claim 5, **characterized in that** the declarative description comprises an identifier of an associated plug-in extension, an identifier of a resource and a list of conditions, fulfillment of which means that the resource is available to a Control Manager.

7. Method for self-configuration of a system according to claim 5, **characterized in that** plug-ins retrieved by the Control Manager (103) are configured to share resources and be used to execute a single task.

8. Method for self-configuration of a system according to claim 5, **characterized in that** the extension plug-ins are executed contextually, meaning that if an execution context requires another plug-in, the manager will run it.

9. A computer program comprising program code means for performing all the steps of the computer-implemented method according to any of claims 5-8 when said program is run on a computer.

10. A computer readable medium storing computer-executable instructions performing all the steps of the computer-implemented method according to any of claims 5-8 when executed on a computer.
